# FASCICULE DE BREVET EUROPEEN

(11) **EP 0 462 898 B1**
(45) Date de publication et mention de la délivrance du brevet: **26.01.1994**
(21) Numéro de dépôt: 91401658.9
(22) Date de dépôt: 19.06.1991
(51) Int. Cl.: F27B 14/06, C21C 5/52

(54) **Procédé et installation de fusion d'une charge en four**
Verfahren und Einrichtung zum Schmelzen einer Ladung im Ofen
Process and installation for smelting of a charge in a furnace

(30) Priorité: 20.06.1990 FR 9007698
(43) Date de publication de la demande: 27.12.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Jouvaud, Dominique, F-75015 Paris (FR); Perrin, Nicolas, F-92100 Boulogne Billancourt (FR)
(74) Mandataire: Le Moenner, Gabriel

(56) Documents cités:
- EP-A- 0 257 450
- US-A- 3 423 080
- US-A- 4 635 568
- US-A- 4 730 336

## Description

La présente invention concerne la fusion d'une charge dans un four, notamment un four électrique de fusion des ferrailles pour la production d'acier, du type par apport d'énergie de fusion à la charge et avec post-combustion des fumées par injection d'un gaz oxygéné dans l'espace de four au-dessus de la charge sous forme d'au moins un premier jet à un premier niveau horizontal de l'espace et ayant au moins une composante sensiblement tangentielle par rapport à un axe vertical dudit espace.

Un tel procédé est décrit dans le document EP-A-0.257.450, mettant en oeuvre à la fois un brassage du bain et une injection d'un gaz oxygéné par des injecteurs fixes situés sur un niveau dans le haut du four.

L'objet de la présente invention est de proposer un procédé d'injection de gaz oxygéné améliorant notablement, pour la postcombustion, la répartition du gaz oxygéné avec les gaz de combustion, et permettant d'augmenter la durée d'échange entre le gaz oxygéné et les gaz de combustion, notamment CO et H₂ s'échappant de la charge, pour assurer un transfert maximal de l'énergie formée vers la charge métallique.

Pour ce faire, selon une caractéristique de l'invention, le gaz oxygéné est injecté sous forme d'au moins un second jet ayant une composante principale sensiblement tangentielle à un second niveau de l'espace, les premier et second jets étant orientés de façon à former deux courants rotatifs de sens opposés autour de l'axe de l'espace.

Selon d'autres caractéristiques de l'invention :
- les jets de gaz oxygéné d'une série étagée de jets subissent des variations cycliques de débit de gaz oxygéné ;
- les variations cycliques de débits de gaz oxygéné d'une série de jets sont synchronisées entre elles ;
- les variations cycliques de débit de gaz oxygéné d'une série de jets sont déphasées entre elles ;
- les variations de débits sont de type pulsé entre un débit minimum et un débit maximum ;
- les variations cycliques de débit de gaz oxygéné d'une série étagée de jets s'effectuent à la même fréquence que les variations de débit cycliques de gaz oxygéné de la série étagée de jets qui lui est immédiatement voisine ;
- les variations cycliques de séries de jets de plusieurs séries étagées de jets s'effectuent en synchronisme.

De la sorte, on assure une turbulence prononcée et contrôlable du gaz oxygéné avec les produits gazeux issus de la charge, que l'on peut régler à une valeur optimale correspondant à une réaction de post-combustion la plus complète possible.

L'invention concerne également une installation pour la mise en oeuvre d'un tel procédé du type comprenant un espace surplombant une charge dans lequel débouche, à un premier niveau horizontal de l'espace, au moins un premier injecteur de gaz oxygéné orienté pour délivrer un jet ayant au moins une composante sensiblement tangentielle par rapport à un axe vertical de l'espace, caractérisé en ce qu'il comprend au moins un second injecteur de gaz oxygéné débouchant dans l'espace à un second niveau horizontal et orienté pour délivrer un jet ayant une composante principale sensiblement tangentielle et de sens opposé au jet du premier injecteur.

Les caractéristiques et avantages de l'invention ressortiront d'ailleurs de la description qui suit d'une installation de fusion du type four électrique, en référence aux dessins annexés sur lesquels :

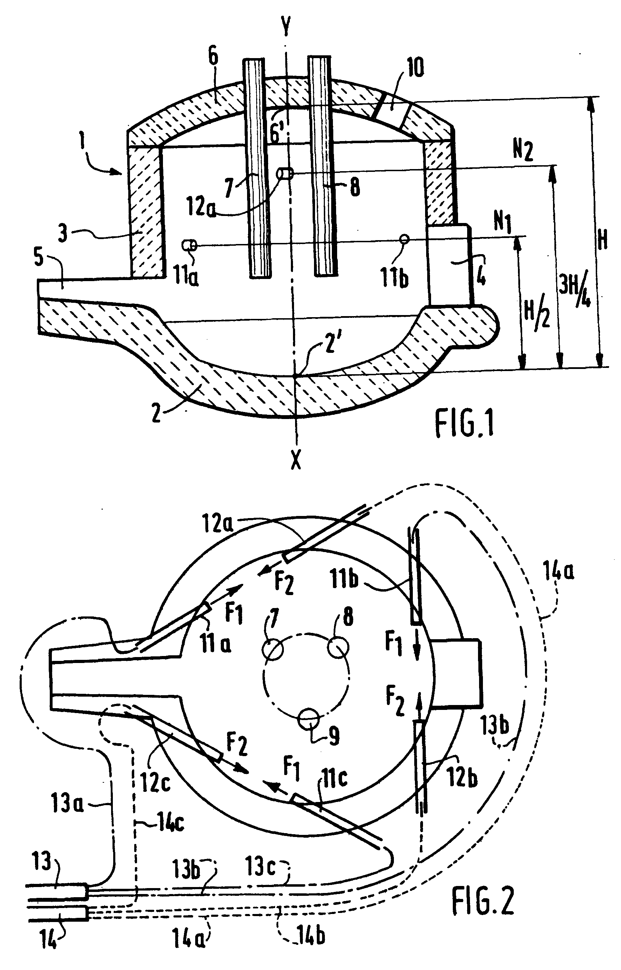

- la figure 1 est une vue en coupe verticale d'un four électrique ;
- la figure 2 est une vue en coupe horizontale de ce même four.

En se référant aux figures annexées, un four électrique 1 présente une sole 2, une paroi latérale 3 avec une porte dite de décrassage 4 et un bec de coulée du produit de fusion 5, ainsi qu'une voûte 6 formant également support de trois électrodes 7, 8, 9 également réparties autour d'un axe vertical X-Y.

Le four 1 est équipé d'au moins deux séries étagées d'au moins deux, typiquement au moins trois injecteurs de gaz oxygéné, respectivement 11a, 11b, 11c, et 12a, 12b, 12c, la première série d'injecteurs 11a, 11b, 11c étant située à un niveau N₁ voisin de la moitié de la hauteur H entre le point le plus bas 2′ de la sole 2 et le point le plus haut 6′ de la voûte 6, alors que la seconde série étagée d'injecteurs 12a, 12b, 12c est située à un niveau N₂ qui représente approximativement les 3/4 de cette même hauteur. Les injecteurs 11a, 11b, 11c, d'une part, 12a, 12b, 12c, d'autre part sont donc situés dans deux plans horizontaux étagés, dont l'écart vertical est de l'ordre du quart de la hauteur maximale de voûte H. Chaque injecteur est orienté de façon à présenter une composante tangentielle principale et une composante radiale centripète. Les débouchés 11a, 11b, 11c de la série inférieure d'injecteurs au niveau N₁= H/2 sont tous orientés, en vue de dessus, dans le sens des aiguilles d'une montre, de façon à former un courant inférieur de gaz à circulation rotative F1 dans le sens des aiguilles d'une montre. Les débouchés des injecteurs 12a, 12b, 12c de la série supérieure d'injecteurs au niveau N₂ = 3 H/4 sont tous orientés, en vue de dessus, dans le sens opposé au sens des aiguilles d'une montre, de façon à former un courant supérieur de gaz à circulation rotative F₂ dans le sens opposé au sens des aiguilles d'une montre.

Les injecteurs d'un même niveau (11a, 11b, 11c au niveau N₁) (12a, 12b, 12c au niveau N₂) sont alimentés par des conduites 13a, 13b, 13c dérivées d'une conduite principale 13, d'une part, par des conduites 14a, 14b, 14c dérivées d'une autre conduite 14 d'autre part, de façon à permettre notamment des différences entre des variations cycliques de débits, par exemple pulsés, de la série d'injecteurs 11a, 11b, 11c au niveau N₁ par rapport à la série d'injecteurs 12a, 12b, 12c au niveau N₂.

Le procédé et l'installation décrits peuvent être appliqués non seulement dans un four électrique pour la production d'acier mais également pour la production de ferro-alliages, dans tout récipient de fusion ou d'affinage pour la production d'alliages métalliques, et plus généralement dans tout récipient contenant une masse liquide à haute température émettant des gaz non totalement brûlés (métallurgie, verrerie, cimenterie).

## Revendications

1. Procédé de fusion d'une charge dans un four (1) par apport d'énergie de fusion à la charge et avec post-combustion des fumées par injection d'un gaz oxygéné dans l'espace de four au-dessus de la charge sous forme d'au moins un premier jet (F₁) à un premier niveau horizontal de l'espace et ayant au moins une composante sensiblement tangentielle par rapport à un axe vertical (X-Y) dudit espace, caractérisé en ce que le gaz oxygéné est injecté sous forme d'au moins un second jet (F₂) ayant une composante principale sensiblement tangentielle à un second niveau de l'espace, les premier et second jets étant orientés de façon à former deux courants rotatifs de sens opposés autour de l'axe de l'espace.

2. Procédé selon la revendication 1, caractérisé en ce qu'il met en oeuvre au moins deux premiers (F₁) et au moins deux seconds (F₂) jets angulairement répartis autour de l'axe vertical (X-Y).

3. Procédé selon la revendication 1 ou la revendication 2, caractérisé en ce que les premier (F₁) et second (F₂) jets ont des variations cycliques de débit de gaz oxygéné.

4. Procédé selon la revendication 3, caractérisé en ce que les variations cycliques de débit d'au moins les premiers jets (F₁) sont synchronisées.

5. Procédé selon la revendication 3, caractérisé en ce que les variations cycliques de débit d'au moins les premiers jets (F₁) sont déphasées.

6. Procédé selon l'une des revendications 3 à 5, caractérisé en ce que les variations cycliques de débit des premiers jets (F₁) ont la même fréquence que celles des seconds jets (F₂).

7. Procédé selon la revendication 6, caractérisé en ce que les variations cycliques du débit des premiers (F₁) et seconds (F₂) jets s'effectuent en synchronisme.

8. Procédé selon l'une des revendications 3 à 7, caractérisé en ce que les variations de débit sont de type pulsé entre des débits minimum et maximum.

9. Four de fusion de charge comprenant un espace surplombant une charge dans lequel débouche, à un premier niveau horizontal (N₂) de l'espace, au moins un premier injecteur de gaz oxygéné (12a, 12b, 12c) orienté pour délivrer un jet ayant au moins une composante sensiblement tangentielle par rapport à un axe vertical (X-Y) de l'espace, caractérisé en ce qu'il comprend au moins un second injecteur de gaz oxygéné (11a, 11b, 11c) débouchant dans l'espace à un second niveau horizontal (N₁) et orienté pour délivrer un jet ayant une composante principale sensiblement tangentielle et de sens opposé au jet du premier injecteur.

10. Dispositif selon la revendication 9, caractérisé en ce qu'il comprend au moins deux premiers (12a-12c) et au moins deux seconds (11a-11c) injecteurs angulairement répartis autour de l'axe vertical (X-Y).

11. Dispositif selon la revendication 10, caractérisé en ce que les premiers (12a-12c) et seconds (11a-11c) injecteurs sont alimentés par des conduites de gaz distinctes respectives (14, 13).

## Patentansprüche

1. Verfahren zum Schmelzen einer Charge in einem Ofen (1) durch Zufuhr von Schmelzenergie zu der Charge und mit Nachverbrennung der Rauchgase durch Einleitung eines sauerstoffreichen Gases in den Ofenraum oberhalb der Charge in einer ersten horizontalen Höhe des Raumes in Form mindestens eines ersten Strahls (F₁) mit mindestens einer bezüglich einer vertikalen Achse (X-Y) des Raumes im wesentlichen tangentialen Komponente, dadurch gekennzeichnet, daß das sauerstoffreiche Gas in Form mindestens eines zweiten Strahls (F₂) mit einer im wesentlichen tangentialen Hauptkomponente in einer zweiten Höhe des Raums eingeleitet wird, wobei die ersten und zweiten Strahlen derart ausgebildet sind, daß sie zwei Wirbelströme um die Achse des Raums mit zueinander entgegengesetzten Richtungen bilden.

2. Verfahren nach Anspruch 1, dadurch gekennzeichnet, daß mindestens zwei erste (F₁) und mindestens zwei zweite (F₂) Strahlen eingesetzt werden, die winkelversetzt um die vertikale Achse (X-Y) herum angeordnet sind.

3. Verfahren nach Anspruch 1 oder 2, dadurch gekennzeichnet, daß die ersten (F₁) und zweiten Strahlen (F₂) zyklische Mengenänderungen des sauerstoffreichen Gasstroms aufweisen.

4. Verfahren nach Anspruch 3, dadurch gekennzeichnet, daß die zyklischen Mengenänderungen der Ströme mindestens der ersten Strahlen (F₁) synchronisiert sind.

5. Verfahren nach Anspruch 3, dadurch gekennzeichnet, daß die zyklischen Mengenänderungen der Ströme mindestens der ersten Strahlen (F₁) phasenverschoben sind.

6. Verfahren nach einem der Ansprüche 3 bis 5, dadurch gekennzeichnet, daß die zyklischen Mengenänderungen der Ströme der ersten Strahlen (F₁) die gleiche Frequenz wie diejenigen der zweiten Strahlen (F₂) besitzen.

7. Verfahren nach Anspruch 6, dadurch gekennzeichnet, daß die zyklischen Mengenänderungen der Ströme der ersten (F₁) und zweiten Strahlen (F₂) synchron ausgeführt werden.

8. Verfahren nach einem der Ansprüche 3 bis 7, dadurch gekennzeichnet, daß die Menge wellenförmig zwischen Minimal- und Maximalströmen verändert wird.

9. Schmelzofen für eine Charge, mit einem Raum oberhalb der Charge, in den in einer ersten horizontalen Höhe (N₂) des Raumes mindestens ein erster Injektor (12a, 12b, 12c) für sauerstoffreiches Gas mündet, der so ausgerichtet ist, daß er einen Strahl liefert, der, bezogen auf eine vertikale Achse (X-Y) des Raumes, eine zumindest etwa tangentiale Komponente hat, dadurch gekennzeichnet, daß er mindestens einen zweiten Injektor (11a, 11b, 11c) für sauerstoffreiches Gas umfaßt, der in einer zweiten horizontalen Höhe (N₁) in den Bereich mündet und derart ausgerichtet ist, daß er einen Strahl mit einer im wesentlichen tangentialen Hauptkomponente liefert, dessen Richtung dem Strahl des ersten Injektors entgegengesetzt ist.

10. Vorrichtung nach Anspruch 9, dadurch gekennzeichnet, daß sie mindestens zwei erste (12a bis 12c) und mindestens zwei zweite Injektoren (11a bis 11c) aufweist, die winkelversetzt um die vertikale Achse (X-Y) herum angeordnet sind.

11. Vorrichtung nach Anspruch 10, dadurch gekennzeichnet, daß die ersten (12a bis 12c) und zweiten Injektoren (11a bis 11c) jeweils über eigene Leitungen (14, 13) versorgt sind.

## Claims

1. Process for smelting a charge in a furnace (1) by supplying fusion energy to the charge and with post-combustion of the fumes by injection of an oxygenated gas into the furnace space above the charge in the form of at least one first jet (F₁) at a first horizontal level of the space and having at least one component substantially tangential with respect to a vertical axis (X-Y) of the said space, characterised in that the oxygenated gas is injected in the form of at least one second jet (F₂) having a main component substantially tangential to a second level of the space, the first and second jets being orientated so as to form two currents rotational in opposite directions around the axis of the space.

2. Process according to Claim 1, characterised in that it brings into operation at least two first (F₁) and at least two second (F₂) jets angularly distributed around the vertical axis (X-Y).

3. Process according to Claim 1 or Claim 2, characterised in that the first (F₁) and second (F₂) jets have cyclic variations in flow of oxygenated gas.

4. Process according to Claim 3, characterised in that the cyclic variations of flow of at least the first jets (F₁) are synchronised.

5. Process according to Claim 3, characterised in that the cyclic variations of flow of at least the first jets (F₁) are out of phase.

6. Process according to any of Claims 3 to 5, characterised in that the cyclic variations of flow of the first jets (F₁) have the same frequency as those of the second jets (F₂).

7. Process according to Claim 6, characterised in that the cyclic variations of the flow of the first (F₁) and second (F₂) jets are effected in synchronism.

8. Process according to any of Claims 3 to 7, characterised in that the variations of flow are of a type pulsed between minimum and maximum flowrates.

9. Charge smelting furnace comprising a space extending over a charge into which space opens, at a first horizontal level (N₂) of the space, at least one first oxygenated gas injector (12a, 12b, 12c) orientated so as to deliver a jet having at least one component substantially tangential with respect to a vertical axis (X-Y) of the space, characterised in that it comprises at least one second oxygenated gas injector (11a, 11b, 11c) opening into the space at a second horizontal level (N₁) and orientated so as to deliver a jet having a main component substantially tangential and of opposite direction to the jet of the first injector.

10. Device according to Claim 9, characterised in that it comprises at least two first (12a-12c) and at least two second (11a-11c) injectors angularly distributed around the vertical axis (X-Y).

11. Device according to Claim 10, characterised in that the first (12a-12c) and second (11a-11c) injectors are fed by separate respective gas pipes (14, 13).
